# EUROPÄISCHE PATENTANMELDUNG

(11) **EP 0 584 652 A2**
(43) Veröffentlichungstag der Anmeldung: **02.03.1994**
(21) Anmeldenummer: 93112870.6
(22) Anmeldetag: 11.08.1993
(51) Int. Cl.: G01L 1/22

(54) **Sensor zum Erfassen mechanischer Belastungen**

(30) Priorität: 24.08.1992 DE 4227764
(71) Anmelder: CARL SCHENCK AG, D-64293 Darmstadt (DE)
(72) Erfinder: König, Hans Günter, D-64354 Reinheim (DE)
(74) Vertreter: Brandt, Ernst-Ulrich, Dipl.-Phys., Dipl.-Ing.

(57) **Zusammenfassung**

Die Erfindung betrifft einen Sensor zum Erfassen mechanischer Belastungen mit mindestens einer Meßfeder, mindestens zwei Wandlerelementen zum Wandeln der Deformation der Meßfeder in ein elektrisches Signal und mit einer Zwischenschaltung, welche dieses Signal derart verarbeitet, daß eine Anzeige- und/oder Registriereinrichtung ansteuerbar ist. Um auf einfache Weise eine hochgenaue Hysteresefehlerkompensation zu erreichen, ist vorgesehen, daß mindestens eines der Wandlerelemente als Hilfsdetektor (9 bis 12) mit vielfach höherer Hysterese als die anderen Wandlerelemente ausgeführt ist, und daß mittels geeigneter Verschaltung der Wandlerelemente und Hilfsdetektoren eine Kompensation des Hysteresefehlers des Sensors erfolgt.

## Beschreibung

Die Erfindung betrifft einen Sensor zum Erfassen mechanischer Belastungen mit mindestens einer Meßfeder und mit mindestens zwei Wandlerelementen zum Wandeln der Deformation der Meßfeder in ein elektrisches Signal und mit einer Zwischenschaltung, welche dieses Signal derart verarbeitet, daß eine Anzeige- und/oder Registriereinrichtung ansteuerbar ist.

Derartige Aufnehmer wurden zum Messen von Kräften und/oder Momenten eingesetzt und sind in der Regel mit einem Hysteresefehler behaftet; d. h. man stellt fest, daß zwei unterschiedliche Anzeigewerte für die selbe Last geliefert werden, je nachdem, ob die Messung bei ansteigender oder abfallender Belastung vorgenommen wird. Diese mehrdeutigen Nichtlinearitäten beruhen zum einen auf Dämpfungsvorgängen im Werkstoff des Verformungskörpers selbst, darüber hinaus wird durch die Applikation von Wandlerelementen ein weiterer Hystereseeffekt in das Aufnehmersystem eingebracht. Sommit ist der verbleibende Hysteresefehler einer Serienstreuung unterworfen und kann nicht durch Nacharbeiten behoben werden. So werden bislang Aufnehmer mit sehr geringer Hysterese durch Selektion aus der Serie "hergestellt".

Zur Korrektur des Hysteresefehlers sind bislang nummerische Modellverfahren bekannt geworden, welche in Verbindung mit sogenanten intelligenten Aufnehmern eingestetzt werden. Hierbei wird die Aufnehmerhysterese durch ein mathematisches Modell nachgebildet. Dies ist jedoch mit mehreren Nachteilen verbunden. Zum einen ist der Aufwand zur Erstellung dieses Modells erheblich, zumal für jeden Aufnehmertyp und Größe eine besondere Abstimmung bzw. Variation des Rechenmodells erfolgen muß. Darüber hinaus besteht das in Bezug auf die Meßgenauigkeit noch größere Problem solcher Verfahren darin, daß sie nur arbeiten, solange der Sensor mit einer elektrischen Spannung versorgt wird; d. h. die Belastungshistorie wird bei ausgeschaltetem Sensor nicht mehr erfaßt. Nach dem Wiedereinschalten ist die Korrektur fehlerhaft.

Es wurde auch schon (DE 20 40 987 B2) versucht, Hysterese-fehler auf mechanischer Weise dadurch zu verringern, daß in einem Sensor zwei Meßelemente mit entgegengerichteten Hysteresen miteinander gekoppelt wurden. Zwar lassen sich aufgrund dieses Verfahrens theoretisch Lastanzeigevorrichtungen mit etwas verringerter Hysterese entwickeln, jedoch sind auch hier Anpassungen nach der Fertigung nicht mehr möglich, so daß sämtliche aus Toleranzen resultierenden Fehler vollständig in das Meßergebnis eingehen. Darüber hinaus verkompliziert eine solche Vorrichtung natürlich den mechanischen Aufbau und die Herstellung einer Meßfeder enorm.

Der Erfindung liegt daher die Aufgabe zugrunde, einen gattungsgemäßen Sensor zu schaffen, der bei einfachem Aufbau und mit einfachem Abgleichverfahren nahezu frei ist von Hysteresefehlern.

Diese Aufgabe wird zum einen auf passive Weise dadurch gelöst, daß mindestens eines der Wandlerelemente als Hilfsdetektor mit vielfach höherer Hysterese als der oder die anderen Wandlerelemente ausgeführt ist, und daß mittels einer geeigneten Verschaltung der Wandlerelemente und des Hilfsdetektors eine Kompensation des Hysteresefehlers des Sensors erfolgt.

Eine Lösung, die auf eine aktive Hysterese-kompensation abzielt, sieht vor, daß mindestens eines der Wandlerelemente als Hilfsdetektor mit vielfach höherer Hysterese als der oder die anderen Wandlerelemente ausgeführt ist, und daß mittels geeigneter Rechenwerke, denen das Signal der Wandlerelemente und des Hilfsdetektors zugeführt wird, eine aktive Fehlerkompensation des Hysteresefehlers des Sensors erfolgt. Dabei sind die genannten Rechenwerke sowohl in analoger Schaltungstechnik als auch durch numerische Rechenverfahren realisierbar.

Um eine eindeutige Meßaussage über die Hysterese und eine gute Speicherfunktion zu erhalten, sollte die Hysterese des Hilfsdetektors betragsmäßig mindestens zehnmal, wenn nicht hundert-oder tausendmal größer sein als diejenige der eigentlichen Wandlerelemente. Die Wandlerelemente sind vorzugsweise zu einer Meßbrücke verschaltet, um ein leicht zu verarbeitendes Ausgangssignal zu erhalten. Bei einer bevorzugten Ausführungsform der Erfindung ist es vorgesehen, daß der oder die Hilfsdetektor(en) mit der Meßbrücke verschaltet sind und daß der Hystereseabgleich mittels Koppelungswiderständen bzw. -impedanzen erfolgt. Eine solche passive Kompensation läßt sich besonders einfach realisieren. Diese Verschaltung bewirkt im Prinzip eine Subtraktion des durch den Koppelungswiderstand gewichteten Hysteresesignals des Hilfsdetektors von der Hysterese des Meßwandlers und der Meßfeder. Gerade bei dieser Art der Hysteresekompensation ist ein sehr großer Hystereseunterschied zwischen Hilfsdetektor und Wandlerelement wichtig, da neben den oben genannten Gründen als weiterer Vorteil eines großen Hystereseunterschiedes die geringe Rückwirkung der Hilfssensoren auf die eigentliche Meßbrücke zu sehen ist, da in diesem Fall große Koppelungswiderstände eingesetzt werden. Generell ist natürlich durch die große Hysteresedifferenz eine feine und genaue Hystereseminimierung durch das Anpassen des Koppelungswiderstandes möglich.

Eine besonders gute Kompensationsmöglichkeit ergibt sich beispielsweise bei einer Vollbrückenschaltung, wenn jedem der vier Wandlerelemente der Brücke ein Hilfsdetektor zugeordnet ist.

Der Hilfsdetektor und das zugeordnete Wandlerelement kann in einem gemeinsamen Brückenzweig angeordnet sein, sie können jedoch auch in eigenen elektrisch parallel geschalteten Zweigen als Hilfsbrücke vorgesehen werden. Auch eine Verschaltung der Hilfsdetektoren in den Speiseleitungen der Meßbrücke ist möglich und über als Shunt-Widerstände geschaltete Koppelungswiderstände anpaßbar.

Bei besonders großer Ausnutzung der Wandlerelemente tritt eine asymmetrisch verzerrte Hystereseschleife auf, weshalb bei einer bevorzugten Ausführungsform der Erfindung eine last- bzw. signalabhängige Wichtung der Kompensation vorgesehen ist.

Besonders günstig ist es, wenn die Hilfdetektoren in Abhängigkeit ihrer physikalischen Eigenschaften auch noch der Kompensation mindestens einer weiteren Einflußgröße dienen. Eine für die Praxis besonders wichtige Ausführungsform der Erfindung schlägt daher vor, daß die Hilfsdetektoren der Kompensation sowohl von Hysterese-fehlern als auch von temperaturabhängigen Fehlern dienen.
Aufgrund ihrer Hystereseeigenschaften eignet sich das erfindungsgemäße Kompensationsverfahren besonders für Wandlerelemente auf Dehnungsmeßstreifenbasis. Hierzu wird auch vorgeschlagen, daß die Wandlerelemente einschließlich der Hilfsdetektoren als Dehnungsmeßstreifen ausgebildet sind, wobei es auch in Bezug auf eine gemeinsame Kompensation von Hysterese- und Temperaturfehlern besonders günstig ist, wenn die Hilfsdetektoren als Dehnungsmeßstreifen aus einer Nickellegierung ausgeführt sind.

Weitere vorteilhafte Merkmale sowie die Funktion der Erfindung ergeben sich aus der nachstehenden Beschreibung von Ausführungsbeispielen anhand der Zeichnungen.

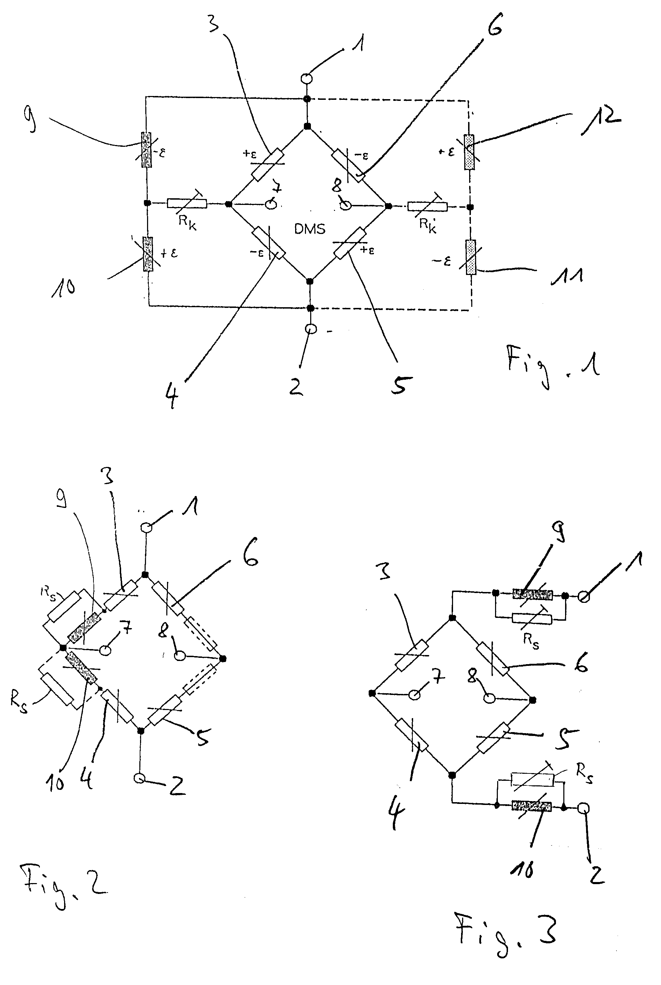

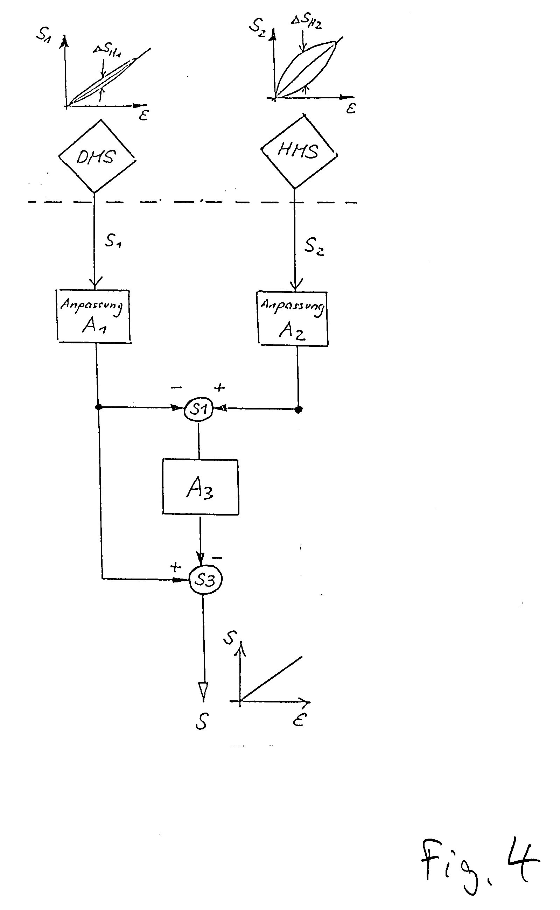

Hierzu zeigen die Figuren 1 bis 3 jeweils Ausführungsformen einer passiven Hysteresekompensation, während in Figur 4 ein aktives Kompensationsverfahren skizziert ist. Für einander entsprechende Teile werden im folgenden die gleichen Bezugszeichen gewählt.

In Figur 1 ist eine Vollbrückenschaltung dargestellt, die an den Anschlußstellen 1 und 2 mit einer Speisespannung versorgt wird, wobei jeder Brückenzweig einen Dehnungsmeßstreifen 3, 4, 5, 6 enthält. Die einander diagonal gegenüberliegenden Dehnungsmeßstreifen 3 und 5 sind dabei auf einer nicht dargestellten Meßfeder derart appliziert, daß sie unter Einwirkung einer Kraft in eine bestimmte Richtung einer Dehnungsbeanspruchung unterliegen, während die beiden anderen Dehnungsmeßstreifen 4 und 6, welche sich auf der anderen Diagonalen befinden, unter gleichgerichteter Krafteinwirkung eine Stauchung erfahren. Die einwirkende Kraft bewirkt eine Brückenverstimmung, welche dann zu einem belastungsabhängigen Ausgangssignal führt, welches an den Anschlußstellen 7 und 8 abgegriffen wird. Zum Abgleich des Hysteresefehlers ist jeweils eine elektrisch parallel zu den beiden Halbbrücken angeordnete Hilfsbrücke geschaltet, welche zum einen an die Speisespannung (Anschlußstelle 1 und 2) und an den jeweiligen Diagonalabgriff (Anschlußstelle 7 bzw. 8) angeschlossen ist.

Jede Hälfte einer Hilfsbrücke beinhaltet einen Hilfsdetektor 9, 10, 11 bzw. 12 mit einer Hysterese, welche etwa um den Faktor 1000 größer ist als die Gesamthysterese der Dehnungsmeßstreifen 3 bis 6 und der Meßfeder. Die Verbindung zwischen den Hilfsbrücken und der Meßbrücke zweigt jeweils zwischen den beiden Hilfsdetektoren 9 und 10 bzw. 11 und 12 einer Hilfsbrücke ab und ist mit der Anschlußstelle 7 bzw. 8 verbunden. In dieser Verbindung ist ein Koppelungswiderstand Rₖ zum Anpassen des Einflusses der Hilfsdetektoren auf die eigentliche Meßbrücke angeordnet. Durch Verstellen oder Verändern dieses Koppelungswiderstandes Rₖ erfolgt dann die Abgleichung des Hysteresefehlers.

Durch die große Differenz der Hysteresen von Hilfsdetektoren und Dehnungsmeßstreifen werden zum Angleichen relativ große Koppelungswiderstände Rₖ verwendet, so daß der Einfluß der Hilfsbrücken auf das Meßsignal der eigentlichen Meßbrückenschaltung sehr gering ist.

Die Hilfsdetektoren 9 bis 12 sind in gleicher Weise wie die Dehnungsmeßstreifen 3 bis 6 auf der Meßfeder appliziert. Bei positivem k-Faktor der Hilfsdetektoren ist vorgesehen, daß die parallel zu den Dehnungsmeßstreifen 3 bzw. 5 geschalteten Hilfsdetektoren 9 und 11 bei Belastung in oben angegebener Richtung eine Stauchung erfahren; d. h., ihre Verformung hat ein umgekehrtes Vorzeichen gegenüber den Verformungen der parallelen Dehnungsmeßstreifen 3 und 5. Dies gilt in analoger Weise für die Hilfssensoren 10 und 12, die bei einer oben erwähnten Belastung einer Dehnung ausgesetzt sind. Bei negativen k-Faktoren (z. B. Ni-Widerstände) ist die Verschaltung im umgekehrten Sinne vorzunehmen, bzw. sind die Hilfsdetektoren in 90°-Querrichtung zu drehen. Durch die jeweils gegengerichteten Signale der zugeordneten Hilfsdetektoren lassen sich die Hysteresen der Dehnungsmeßstreifen wirkungsvoll abgleichen.

Es sei an dieser Stelle erwähnt, daß zum Abgleich des Hysteresefehlers bereits eine einzige Hilfsbrücke, beispielsweise die mit den Hilfsdetektoren 9 und 10, ausreicht, jedoch durch die Anordnung der gestrichelten Hilfsbrücke mit den Hilfsdetektoren 11 und 12 in Abhängigkeit von der Symmetrie der Meßfeder eine weitere Verbesserung erzielt werden kann.

Figur 2 zeigt eine Ausführungsform der Erfindung, bei der die Hilfsdetektoren 9 und 10 direkt in jeweils einem Zweig einer Halbbrücke angeordnet sind. Der Abgleich erfolgt dann über sogenannte Shunt-Widerstände, welche einstellbar ausgeführt werden können oder aber erst nach entsprechender Auswahl eingesetzt werden. Auch in diesem Beispiel sollen die Hilfssignale den eigentlichen Meßssignalen gegengerichtet sein, d. h., daß der Dehnungsmeßstreifen 3 bei gegebener Belastungsrichtung einer Dehnung unterworfen ist und der im gleichen Brückenzweig angeordnete Hilfsdetektor 9 gestaucht wird; der Dehnungsmeßstreifen 4 wird, wie im Beispiel gemäß Figur 1, gestaucht und der Hilfsdetektor 10 gedehnt. Dies gilt bei negativem k-Faktor der Hilfsdetektoren in umgekehrter Weise.

Durch die gestrichelten Linien in der rechten Brückenhälfte ist angedeutet, daß auch bei dem Ausführungsbeispiel gemäß Figur 2 eine vollständige Kompensation beider Brückenhälften erfolgen kann. Hierzu würden dann weitere Hilfsdetektoren mit parallel geschalteten Shunt-Widerständen in der Schaltung integriert werden.

Figur 3 zeigt ein Ausführungsbeispiel, bei welchem die Hilfsdetektoren 9 und 10 jeweils in der Speiseleitung der als Vollbrücke ausgebildeten Meßbrückenschaltung mit den Dehnungsmeßstreifen 3 bis 6 angeordnet sind. Auch hier erfolgt die Anpassung durch einen veränderbaren Shunt-Widerstand Rₛ.

Figur 4 zeigt in schematischer Darstellung einen erfindungsgemäßen Sensor mit einer aktiven Fehlerkorrektur. Hierzu ist an der Meßfeder eine Dehnungsmeßschaltung DMS und eine Hilfsdetektormeßschaltung HMS appliziert. Die Dehnungsmeßschaltung ist in an sich bekannter Weise aus Dehnungsmeßstreifen mit möglichst geringer maximaler Hysterese ΔS_{H1} ausgeführt. Zur Verdeutlichung ist der Verlauf des Ausgangssignales S₁ über der Dehnung in einem kleinen Schaubild dargestellt. Die Hilfsdetektormeßschaltung HMS kann ebenfalls eine Vollbrücke sein, jedoch weisen diese Dehnungsmeßstreifen dann eine um ein Vielfaches höhere Hysterese ΔS_{H2} auf. Auch hierzu ist das Signal S₂ der Hilfsdetektormeßschaltung über der Dehnung in einem Schaubild dargestellt. Das Nutzsignal S₁ und das Hilfssignal S₂ werden durch geeignete Anpassung A₁ bzw. A₂ auf den gleichen Nennwert skaliert.

Am Summenpunkt S₁ werden beide Signale voneinander abgezogen. Ist die Hysterese des Nutzsignales S₁ sehr viel kleiner als die des Hilfssignales S₂, so erhält man das reine Hysteresesignal des Hilfssensors. Gewichtet mit dem Faktor A₃ wird dieses Fehlersignal am Summenpunkt S₃ vom Nutzsignal abgezogen. Am Ausgang S steht dann das hysteresebereinigte Meßsignal zur Verfügung.

Wird als Hilfsdetektor beispielsweise ein Dehnungsmeßstreifen auf Nickelbasis verwandt und an geeignerter Stelle appliziert, so kann mittels des Hilfssignales sowohl eine Kompensation des Hysteresefehlers als auch des Temperaturfehlers erfolgen, denn die Nickeldehnungs-meßstreifen haben sowohl eine deutlich höhere Hysterese als auch einen hohen Temperaturkoeffizienten.

Es sei noch erwähnt, daß sich die Erfindung keineswegs auf die Verwendung von Dehnungsmeßstreifen als Wandlerelement beschränkt, sondern daß alle paarweisen Wandlerelemente in Frage kommen, welche eine große Hysteresedifferenz aufweisen und ein elektrisches Ausgangssignal geben.

## Patentansprüche

1. Sensor zum Erfassen mechanischer Belastungen mit mindestens einer Meßfeder und mit mindestens zwei Wandlerelementen zum Wandeln der Deformation der Meßfeder in ein elektrisches Signal und mit einer Zwischenschaltung, welche dieses Signal derart verarbeitet, daß eine Anzeige- und/oder Registriereinrichtung ansteuerbar ist, dadurch gekennzeichnet, daß mindestens eines der Wandlerelemente als Hilfsdetektor (9 bis 12) mit vielfach höherer Hysterese als der oder die anderen Wandlerelemente ausgeführt ist, und daß mittels geeigneter Verschaltung der Wandlerelemente und des Hilfsdetektors eine Kompensation des Hysteresefehlers des Sensors erfolgt.

2. Sensor zum Erfassen mechanischer Belastungen mit mindestens einer Meßfeder und mit mindestens zwei Wandlerelementen zum Wandeln der Deformation der Meßfeder in ein elektrisches Signal und mit einer Zwischenschaltung, welche dieses Signal derart verarbeitet, daß eine Anzeige- und/oder Registriereinrichtung ansteuerbar ist, dadurch gekennzeichnet, daß mindestens eines der Wandlerelemente als Hilfsdetektor (9 bis 12) mit vielfach höherer Hysterese als der oder die anderen Wandlerelemente ausgeführt ist, und daß mittels geeigneter Rechenwerke, denen das Signal der Wandlerelemente und des Hilfsdetektors zugeführt wird, eine aktive Fehlerkompensation des Hysteresefehlers des Sensors erfolgt.

3. Sensor nach Anspruch 2, dadurch gekennzeichnet, daß das Rechenwerk als Mikroprozessor im Sensor integriert ist.

4. Sensor nach einem der vorhergehenden Ansprüche, dadurch gekennzeichnet, daß die Hysterese des Hilfsdetektors (9 bis 12) mindestens zehnmal größer ist als diejenige der Wandlerelemente.

5. Sensor nach einem der vorhergehenden Ansprüche, dadurch gekennzeichnet, daß die Wandlerelemente (3 bis 6) zu einer Meßbrücke verschaltet sind.

6. Sensor nach Anspruch 5, dadurch gekennzeichnet, daß die Hilfsdetektoren (9 bis 12) mit der Meßbrücke verschaltet sind, und daß der Hystereseabgleich mittels Koppelungswiderständen (Rₖ, Rₛ) bzw. Koppelungsimpedanzen erfolgt.

7. Sensor nach einem der vorhergehenden Ansprüche, dadurch gekennzeichnet, daß jedem Wandlerelement (3 bis 6) ein Hilfsdetektor (9 bis 12) zugeordnet ist.

8. Sensor nach einem der Ansprüche 5 bis 7, dadurch gekennzeichnet, daß der Hilfsdetektor (9 bis 12) und das zugeordnete Wandlerelement (3 bis 6) in einem gemeinsamen Brückenzweig angeordnet ist.

9. Sensor nach einem der Ansprüche 5 bis 7, dadurch gekennzeichnet, daß der/die Hilfsdetektor(en) (9 bis 12) in eigenen, elektrisch parallel zur eigentlichen Meßbrücke geschalteten Zweigen, vorgesehen sind.

10. Sensor nach einem der Ansprüche 5 bis 7, dadurch gekennzeichnet, daß die Hilfsdetektoren (9, 10) in den Speiseleitungen der Meßbrücke vorgesehen sind.

11. Sensor nach einem der vorhergehenden Ansprüche, dadurch gekennzeichnet, daß eine signalabhängige Wichtung der Kompensation vorgesehen ist.

12. Sensor nach einem der vorhergehenden Ansprüche, dadurch gekennzeichnet, daß die Hilfsdetektoren (9 bis 12) in Abhängigkeit ihrer physikalischen Eigenschaften der Kompensation mindestens einer weiteren Einflußgröße dienen.

13. Sensor nach Anspruch 12, dadurch gekennzeichnet, daß die Hilfsdetektoren (9 bis 12) der Kompensation sowohl von Hysteresefehlern als auch von temperaturabhängigen Fehlern dienen.

14. Sensor nach einem der vorhergehenden Ansprüche, dadurch gekennzeichnet, daß die Wandlerelemente (3 bis 6) einschließlich der Hilfsdetektoren (9 bis 12) als Dehnungsmeßstreifen oder -ringe ausgebildet sind.

15. Sensor nach einem der vorhergehenden Ansprüche, dadurch gekennzeichnet, daß die Hilfsdetektoren (9 bis 12) als Dehnungsmeßstreifen auf Nickelbasis ausgeführt sind.

16. Sensor nach einem der vorhergehenden Ansprüche, dadurch gekennzeichnet, daß die Hilfsdetektoren in Querrichtung, d. h. um 90° gedreht, den jeweiligen Haupt-Wandlerelementen zugeordnet sind.
